# EUROPEAN PATENT APPLICATION

(11) **EP 3 184 208 A1**
(43) Date of publication of application: **28.06.2017**
(21) Application number: 15833051.4
(22) Date of filing: 17.08.2015
(51) Int. Cl.: B22F 3/105, B29C 67/04, C04B 35/64

(54) **MULTI-WAVELENGTH LASER AREA SELECTION QUICK FORMING SYSTEM AND METHOD**

(30) Priority: 18.08.2014 CN 201410406399
(71) Applicant: Chongqing Institute of Green and Intelligent Technology, Chinese Academy of Science, Chongqing 400714 (CN)
(72) Inventor: DUAN, Xuanming, Chongqing 400714 (CN); LIU, Jie, Chongqing 400714 (CN); CAO, Hongzhong, Chongqing 400714 (CN); FAN, Shuqian, Chongqing 400714 (CN); ZHENG, Meiling, Chongqing 400714 (CN); LIU, Jiquan, Chongqing 400714 (CN)
(74) Representative: Klunker IP Patentanwälte PartG mbB
(86) International application number: PCT/CN2015/087237
(87) International publication number: WO 2016/026415

(57) **Abstract**

This invention discloses a multi-wavelength selective laser rapid prototyping system comprising a laser light source, a laser transmission and control component, a laser focusing and scanning component, a manufacturing chamber, a powder feeding component, a powder laying component, a gas circulation control component, a real-time monitoring component, a lifting component, a powder recovery component, and a computer. Said laser light source comprises a first laser source for providing a first wavelength laser beam and a second laser source for providing a second wavelength laser beam, or a laser source for providing both the first and second wavelength laser beams.Adoption of a short wave laser beam in the system is beneficial to improve the manufacturing resolution and precision. At the same time a superposed long wavelength laser beam is adopted to ensure the preheating and subsequent heat treatment. The thermal stress of the manufactured structure is reduced.The manufacturing efficiency can also be further improved. This invention also discloses a multi-wavelength selective laser rapid prototyping method.

## Description

### Field of the Invention

The present invention relates to laser 3D printing technique, and more particularly to a multi-wavelength selective laser rapid prototyping system and method.

### Description of the Related Art

3D printing is a typically digital and green intelligent manufacturing technology, in which three-dimensional complicated partsare directly fabricated layer by layerunder computer control with the designed digital model. lt has a wide range of applications in aerospace, defense industry, automobile, mold, consumer electronics, biomedical and other fields.

Selective laser rapid prototyping is a high-precision 3D printing technology that can be used for the manufacture of parts with high precision and high complexity. At present, the selective laser rapid prototypingmainly includesselective laser sintering and selective laser melting. The typical energy sources for selective laser rapid prototyping are the 10.6 µm CO₂ laser and the fiber laser or solid laser with wavelength of about 1.08µm. In the rapid prototyping manufacturing process, the materials in the laser scanning area are fast heated by laser and undergo a fast cooling process after the laser passed. lt will result in a large thermal stress in the manufactured structure, and cause structural deformation or even fracture. By adding the heating and temperature holding unit in the manufacturing chamber, the thermal stress inside the manufactured structures can be reduced, and the utilization rate of the laser energy can also be improved. However, high temperature in the chamber can also damage the powders outside the laser irradiated area, and reduce recovery utilization rate of powders. Therefore, the manufacturing cost will increase. In order to reduce the thermal stress inside the manufactured structure while not destroy the materials outside the laser irradiated area, F. Abe et al. demonstratedselective laser melting metallic structures by using a 1.064 µm Nd: YAG laser with a 10.6 µm CO₂ laser for manufactured structure reheating. By adjusting the distance between the two lasers in the manufacturing plane, it is proved that the thermal stress can be reduced by utilizing a CO₂ laser to reheat the manufactured structures,see F. Abe et al., Journal of Materials Processing Technology, 2001, 111, 210-213. Shi Yusheng et al. proposed a method for selective laser melting rapid prototyping by using three laser beams.The first laser beam with wavelength greater than 10 µm is used to preheat the powders, the second laser beam with wavelength less than 1.1 µm is used to melt the powders and form the structure, and the third laser beam with wavelength greater than 10 µm is used for subsequent heat treatment. This methodcan reduce the thermal stress of the manufactured structures; see Shi Yusheng et al., a selective laser rapid prototyping method for metal powders by using three-beam laser composite scanning (Publication No. CN101607311A, Publication Date December 23, 2009). However, three laser beams scanned one after one in this method, which need a complicated control procedure and more manufacturing time.A lot of heat energy in preheated powders provided by the first laser beam had dispersed before being scanned by the second laser. Therefore, the energy utilization efficiency was reduced. Jan Wilkes et al.proposed a protocol for ceramic structure manufacturing. In this protocol, a CO₂ laser was projectedat 20mm x 30mm area in a manufacturing plane, and powders in the projected area was selectively molten by using a Nd: YAG laser. The result shows that the thermal stress in the manufactured ceramic structure can be reduced by using CO₂ laser preheating, see Jan Wilkes et al., Rapid Prototyping Journal, 2013, 19, 51-57. However, the preheating CO2 laser needs to be projected at a large area for a long time in the method.The energy utilization rate of the preheating laser is low and it may also result in the waste of materials in the irradiated area. Therefore, it is an urgent need to develop a new technology to reduce the thermal stress and the damage to the powders in the unmolten area while improving the manufacturing efficiency and precision.

### Summary of the Invention

In view of the above, it is an object of the invention to provide a high precision, high efficiency and high performance coaxial multi-wavelength selective laser rapid prototyping system and method. The selective laser melting or sintering is carried out by using a focused short wavelength laser beam, and the preheating and subsequent heat treatment is carried out by using a focused long wavelength laser which iscoaxial with the short wavelength laser. The short wavelength laser beam has a small spot size and high photon energy which are helpful to improve the manufacturing precision.The focusing spot size of the long wavelength laser beam is larger than that of the short wavelength laser, which ensures to realize the preheating and subsequent heat treatment. This method could further improve the laser manufacturing efficiency and reduce the thermal stress in the structure.

It is an object of the present invention to provide a multi-wavelength selective laser rapid prototyping system which is realized by the following technical solution.

A multi-wavelength selective laser rapid prototyping system comprising a laser light sources, a laser transmission and control component, a laser focusing and scanning component, a manufacturing chamber, a powder feeding component, a powder laying component, a gas circulation control component, a real-time monitoring component, a lifting component, a powder recovery component, and a computer, wherein
-- said laser light source comprises a first laser source for providing a first wavelength laser beam and a second laser source for providing a second wavelength laser beam, or a laser source for providing both the first and second wavelength laser beams;
-- said laser the focusing and scanning component includes laser focusing lenses for focusing the first wavelength laser beam and the second wavelength laser beam respectively, a dichroic mirror for combining the first wavelength laser beam and the second wavelength laser beam into a combined coaxial laser beam propagating in the same direction, and a two-dimensional galvanometer scanner for realizing laser scanning in a manufacturing plane; and
-- said real-time monitoring component includes an imaging unit for monitoring the morphology of a molten pool and a temperature monitoring unit for monitoring the temperature and temperature field distribution of the molten pool.

Further, the wavelength range of the aforesaid first wavelength laser beam is from 200nm to 1.1µm, the wavelength range of the aforesaid second wavelength laser beam is from 700nm to 10.6µm; and the first wavelength laser beam and the second wavelength laser are continuous, pulsed or quasi-continuous laser.

Further, said the laser transmission and control component includes reflectors for changing laser beam direction, beam expanders for realizing the first and second wavelength laser beams expansion respectively,laser shutters for controlling the switch-on and -off of laser and laser attenuators for controlling the power of the first wavelength laser beam and the second wavelength laser beam respectively.

Further, said manufacturing chamber includes a chamber door for taking out manufactured structures, an observation window for visual observation, a light window for real-time monitoring, a laser incidence window for laser input, and a gas flow port for gas circulation and atmosphere control.

Further, a substrate is arranged in the aforesaid manufacturing chamber, and the substrateis connected with the lifting componentto realize the lifting movement of the substrate; the bottom of the manufacturing chamber is further provided with a channel for recovering the powders, wherein a port of the channel is connected with the powder recovery component.

Further, said imaging unit includes a CCD for image acquisition and a monitor for image presentation.

Further, said temperature monitoring unit comprises an infrared thermal imager for infrared thermal image acquisition and a data acquisition card for acquiring data of the thermal imager and inputting the data to the computer.

It is another object of the present invention to provide a multi-wavelength selective laser rapid prototyping method, wherein said method comprises the following steps:
1) building a geometric model by using a computer drawing software, slicing the model, and planning a scanning path;
2) extractingair in a manufacturing chamber and filling the chamber with protective gas according to need;
3) pretreating and feeding powders by a powder feeding component, and laying a layer of powderson a substrate by using the powder laying component;
4) simultaneously scanning the laid powders in the plannedscanning path by using a focused first and second wavelength laser beam so that powders are moltento form a single-layer structure;
5) lowering the substrate by one layer, and repeating the processes of powder laying and selective laser scanning until the manufacturing process of the structure in designed geometric model is completed; and
6) cleaning the unmolten metal powders and taking out the manufactured structure.

Further, said powder has a size from 10 nm to 200 µm.

Further, said powder includes metal powder, plastic powder, ceramic powder, coated sand powder, polymer powder.

The beneficial technical effects of the invention are as follows:
1. According to the system and method of the invention, materialmelting for forming structure is carried out by using a short wavelength laser, thus the manufacturing resolution and precision can be improved.
2. According to the system and method of the invention, a dual-wavelength laser coaxial simultaneous scanning is carried out, thus the manufacturing efficiencycan also be improved.
3. According to the system and method of the present invention, the preheating and subsequent heat treatment can becarried out by using a long wavelength laser, thus the thermal stresses of the manufactured structure can be reduced.No damage is generated to powders in the unmolten area by means of a selective preheating, thus the waste and consumption of powders can also be reduced.

### Brief Description of the Drawings

The present invention will now be described in further detail with accompanying drawings to make the objects, the technical solutions and the advantages of this invent more apparent, wherein,
Fig. 1 is the schematic structural view of the systemaccording to an embodiment of the present invention;
Fig. 2 is the schematic structural view of the systemaccording to another embodiment of the present invention;
Fig. 3 is a flow chart of multi-wavelength selective laser rapid prototyping method according to the present invention; and
Fig. 4 is a schematic view of laser focal spots in the present invention.

Wherein a first laser is represented by 1, a second laser by 2, a laser transmission control component by 3, a laser transmission control component by 4, a laser focusing and scanning component by 5, a substrate by 6, a powder feeding component by 7, a powder laying component by 8, a real-time monitoring component by 9, a lifting component by 10, a powder recovery component by 11 and a computer by 12.

### Description of the Embodiments

Exemplary embodiments of the present invention will be described below. It should be understood that the preferred exemplary embodiments are merely to illustrate the invention and don't limit the scope of the invention.

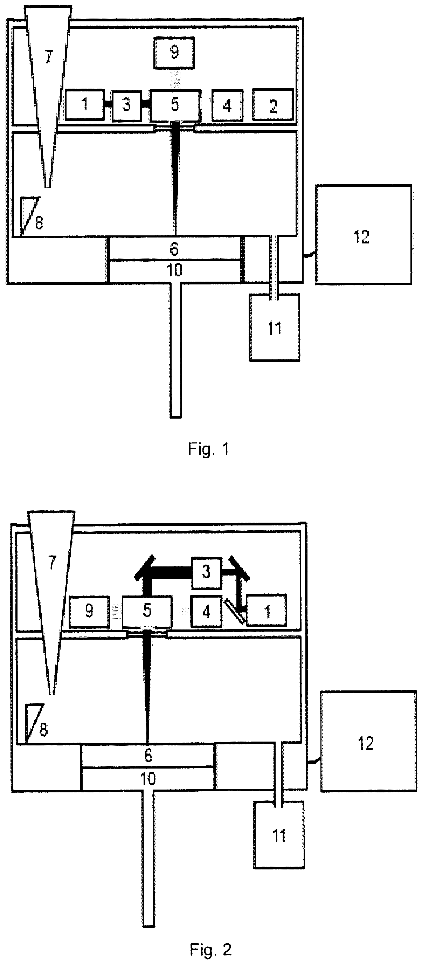

Fig. 1 is as chematic view of the system with two laser sources according to the present invention. As shown in the figure, the system comprisesa first laser source 1 in a first light path and a laser transmission and control component 3 for the first laser beam, a second laser source 2 in a second light path and a laser transmission and control component 4 for the second laser beam, a laser focusing and scanning component 5, a substrate 6, a powder feeding component 7, a powder laying component 8, a real-time monitoring component 9; a lifting component 10; a powder recovery component 11, and acomputer 12.

The first laser source 1 and the second lasersource 2 are used to supply laser beams of different wavelengths respectively, and the laser beams outputted by the first and second laser sources are switched on oroff, expanded and power-modulated by using the laser transmission and control components 3 and 4.

Said the laser focusing and scanning component 5 is used to realize the focusing and combination of the first and second wavelength laser beams,and scanning in a manufacturing plane.

The bottom of aforesaidmanufacturing chamber has a substrate 6. On the top of the chamber,the powder feeding component 7 is provided for powder delivery and pretreatment. The powder laying component 8 for laying powders onto the substrate 6is below the powder feeding component 7.

The real-time monitoring component 9 comprises an imaging unit for monitoring the morphology of amolten pool and a temperature monitoring unit for monitoring the temperature and temperature field distribution of the molten pool, wherein the imaging unit includes a CCD for image acquisition and a monitor for imagepresentation, and the temperature monitoring unit comprises an infrared thermal imager for infrared thermal image acquisition and a data acquisition card for acquiring data of the thermal imager and inputting the data to the computer.

The substrate 6 is connected to the lifting component 10, and the lifting movement of the substrate 6 is achieved by the lifting component 10.

The bottom of the manufacturing chamber is also provided with a channel for recovering the powders, and a port of the channel is connected with the powder recovery component 11 for recovering the unmolten powders.

Thecomputer 12 is connected to the laser transmission and control components 3 and 4, the laser focusing and scanning component 5, the substrate 6, the powder feeding component 7, the powder laying component 8, the real-time monitoring component 9, the lifting component 10, and the powder recovery component 11. It is used to control the switching on and offof lasers, the laser power, the changing offocal length, the scanning speed, the lifting of the substrate, the feeding and laying of powders, the molten pool image,the temperature data acquisition, and the powder recovery.

Fig. 2 is as chematic view of the system with one laser source according to the present invention. As shown in the figure, the system comprises a laser source 1 for providing a first and second wavelength laser beams, a dichroic mirror for separating two wavelength laser beams, a reflector for laser beam deflection,laser transmission control components 3 and 4 for the first and second wavelength laser beams, a laser focusing and scanning component 5, a substrate 6, a powder feeding component 7, a powder laying component 8, areal-time monitoring component 9; a lifting component 10; a powder recovery component 11 and,acomputer 12.

The first and the second wavelength laser beams outputted by the laser source 1 are switched on or off, expanded and power-modulated by using the laser transmission and control components 3 and 4.

Said the laser focusing and scanning component 5 is used to realize the focusing and combination of the first and second wavelength laser beams, and scanning in a manufacturing plane.

The bottom of aforesaid manufacturing chamber has a substrate 6. On the top of the chamber, the powder feeding component 7 is provided for powder delivery and pretreatment. The powder laying component 8 for laying powders onto the substrate 6 is below the powder feeding component 7.

The real-time monitoring component 9 comprises an imaging unit for monitoring the morphology of amolten pool and a temperature monitoring unit for monitoring the temperature and temperature field distribution of the molten pool, wherein the imaging unit includes a CCD for image acquisition and a monitor for image presentation, and the temperature monitoring unit comprises an infrared thermal imager for infrared thermal image acquisition and a data acquisition card for acquiring data of the thermal imager and inputting the data to the computer.

The substrate 6 is connected to the lifting component 10, and the lifting movement of the substrate 6 is achieved by the lifting component 10.

The bottom of the manufacturing chamber is also provided with a channel for recovering the powders, and a port of the channel is connected with the powder recovery component 11 for recovering the unmolten powders.

The computer 12 is connected to the laser transmission and control components 3 and 4, the laser focusing and scanning component 5, the substrate 6, the powder feeding component 7, the powder laying component 8, the real-time monitoring component 9, the lifting component 10, and the powder recovery component 11. It is used to control the switching on and off of lasers, the laser power, the changing of focal length, the scanning speed, the lifting of the substrate, the feeding and laying of powders, the molten pool image, the temperature data acquisition, and the powder recovery.

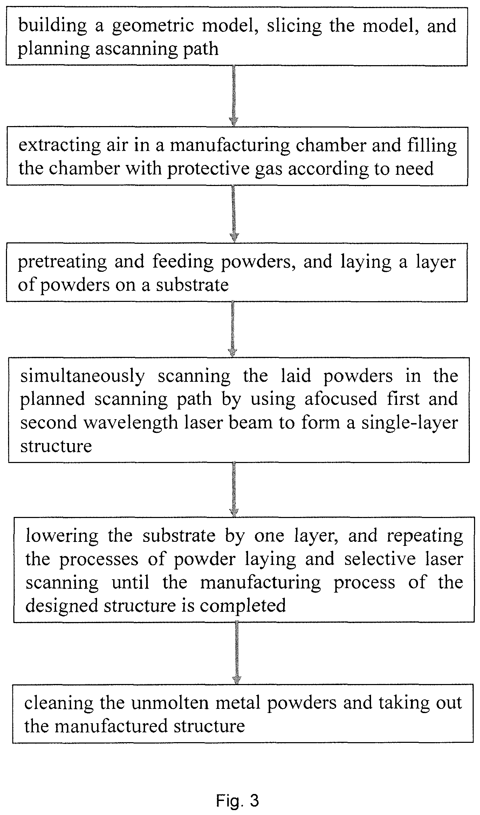

Fig. 3 is a flow chart of multi-wavelength selective laser rapid prototyping method according to the present invention, as shown in the figure, said method comprises the following steps:
1) building a geometric model by using a computer drawing software, slicing the model, and planning a scanning path;
2) extracting air in a manufacturing chamber and filling the chamber with protective gas according to need;
3) pretreating and feeding powders by a powder feeding component, and laying a layer of powders on substrate by using the powder laying component;
4) simultaneously scanning the laid powders in the planned scanning path by using a focused first and second wavelength laser beam so that powders are melted to form a single-layer structure;
5) lowering the substrate by one layer, and repeating the processes of powder laying and selective laser scanning until the manufacturing process of the structure in designed geometric model is completed; and
6) cleaning the unmolten metal powders and taking out the manufactured structure.

The powder has a size from 10 nm to 200 µm.

The powder includes metal powder, plastic powder, ceramic powder, coated sand powder, polymer powder.

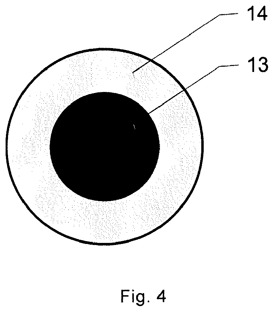

Fig. 4 is a schematic view of laser focal spots in the present invention. Thefocal spot 13 is the focusof the first wavelength laser beam on the manufacturing plane having a wavelength of 200 nm to 1.1 µm. The focal spot 14 is the focus of the second wavelength laser beam on the manufacturing plane having a wavelength of 700 nm to 10.6 µm. The first wavelength laser beam and the second wavelength laser beam are coaxially irradiated onto the manufacturing plane and are focused in the manufacturing plane. The laser focalspot 13 is smaller than the laser focal spot 14 in the manufacturing plane,andit is superimposed with and surrounded by the laser focal spot 14. The second wavelength laser beam which has the laser spot 14 is capable of achieving preheating and subsequent heat treatment of the powders, and in the superimposed region causes the melting of the powders to form a structure on the manufacturing plane, together with the first wavelength laser beam having a wavelength of 200 nm to 1.1 µm.

### Example 1

The present invention will now be described in detail with reference to Figs. 1 and 3 by taking the multi-wavelength selective laser rapid prototyping of ZrO2-Al2O3 ceramic as an example. The selected ZrO2-Al2O3 ceramic powders are approximately spherical powders having particle size from 30µm to 60 µm.

Firstly, a geometric model of ceramic structure is built by using a computer drawing software, the model is sliced, and the scanning path is planned. The air in manufacturing chamber is then extracted.The pretreatment and feeding of powders are carried out by the powder feeding component 7. A layer of ceramic powders is laid on substrate 7 by using the powder laying component 8.The thickness of the laid monolayer ceramic powders is 60 µm. A 532nm laser beam outputted by a green light laser source 1 with a laser power of 50-150 W is selected as the first wavelength laser beam; and a 10.6µm laser beam outputted by a CO2 laser source 2 with a laser power of 100-400 W is selected as the second wavelength laser beam. The laid powders are simultaneously scanned in the planned scanning path with the focused first and second wavelength laser beam at a scanning speed of about 200 to 400 mm/s, so that the powderscan melt to form a single layer structure. The morphology of the molten pool and the distribution of the temperature field during the manufacturing process are monitored by the real-time monitoring component 9.

The substrate 6 is lowered 60 µm by using the lifting component 10, and the powder laying and selective laser scanning processes are repeated until the manufacturing process of the ceramic structure in designed geometric model is completed. Then, the upper surface of the substrate 6 is raised to the initial position by using the lift component 10, and the unmolten ceramic powders are cleaned and the manufactured ceramic structure is taken out.

### Example2

The present invention will now be described in detail with reference to Figs. 2 and 3 by taking themulti-wavelength selective laser rapid prototyping of titanium alloy as an example. The selected titanium alloy powders are approximately spherical powders having particle size from 20µm to 30 µm.

Firstly, a geometric model of titanium alloy structure is built by using a computer drawing software, the model is sliced, and the scanning path is planned. The air in manufacturing chamber is then extracted and filled with argon as a protective gas.The pretreatment and feeding of powders are carried out by using the powder feeding component 7.A layer of titanium alloypowders is laid on substrate 7 by using the powder laying component 8.The thickness of the laid monolayer titanium alloy powders is 50µm. As shown in Fig. 2, a 532nm laser beam outputted by the green light laser source with a laser power of 30-50 W is selected as the first wavelength laser beam; and a 1064nm light laser beam outputted by the near infrared light laser source 1with a laser power of 150-200 W is selected as the second wavelength laser beam.The laid powders are simultaneously scanned in the planned scanning path with the focused first and second wavelength laser beam at a scanning speed of about 300 to 400 mm/s, so that the powderscan melt to form a single layer structure. The morphology of the molten pool and the distribution of the temperature field during the manufacturing process are monitored by the real-time monitoring component 9.

The substrate 6 is lowered 50 µm by using the lifting component 10, and the powder laying and selective laser scanning processes are repeated until the manufacturing process of the titanium alloy structure in designed geometric model is completed. Then, the upper surface of the substrate 6 is raised to the initial position by using the lift component 10, and the unmolten titanium alloy powders are cleaned and the manufactured titanium alloystructure is taken out.

At last, it should be understood that the aforesaidpreferred embodiments are merely to illustrate the invention and don't limit the scope of the invention. Although the invention has been described in detail, it should be appreciated the present invention may be modified in forms and details without departing from the scope or spirit of the invention as defined by the appended claims.

## Claims

1. A multi-wavelength selective laser rapid prototyping system comprising a laser light source, a laser transmission and control component, a laser focusing and scanning component, a manufacturing chamber, a powder feeding component, a powder laying component, a gas circulation control component, a real-time monitoring component, a lifting component, a powder recovery component and a computer.
**characterized in that**,
-- said laser light source comprises a first laser source for providing a first wavelength laser beam and a second laser source for providing a second wavelength laser beam, or a laser source for providing both the first and second wavelength laser beams;
-- said laser focusing and scanning component includes laser focusing lenses for focusing the first wavelength laser beam and the second wavelength laser beam respectively, a dichroic mirror for combining the first wavelength laser beam and the second wavelength laser beam into a combinedcoaxial laser beam propagating in the same direction, and a two-dimensional galvanometer scanner for realizing laser scanning in a manufacturing plane; and
-- said real-time monitoring component includes an imaging unit for monitoring the morphology of amolten pool and a temperature monitoring unit for monitoring the temperature and temperature field distribution of the molten pool.

2. The multi-wavelength selective laser rapid prototyping system according to claim 1, **characterized in that** the wave length range of the aforesaid first wavelength laser beam is from 200nm to 1.1µm, the wavelength range of the aforesaid second wavelength laser beam is from 700nm to 10.6µm; and the first wavelength laser beam and the second wavelength laser are continuous, pulsed or quasi-continuous laser.

3. The multi-wavelength selective laser rapid prototyping system according to claim 1, **characterized in that** said laser transmission and control component includes reflectors for changing laser beam direction, beam expanders for realizing the first and second wavelength laser beams expansion respectively, laser shutters for the switching on and off of laser,and laser attenuators for controlling the power of the first wavelength laser beam and the second wavelength laser beam respectively.

4. The multi-wavelength selective laser rapid prototyping system according to claim 1, **characterized in that** saidmanufacturing chamber includes a chamber door for taking out manufactured structures, an observation window for visual observation, a light window for real-time monitoring, a laser incidence window for laser input, and a gas flow port for gas circulation and atmosphere control.

5. The multi-wavelength selective laser rapid prototyping system according to claim 4, **characterized in that** a substrate is arranged in the aforesaid manufacturing chamber, and the substrate is connected with the lifting componentto realize the lifting movement of the substrate; the bottom of the manufacturing chamber is further provided with a channel for recovering the powders, wherein a port of the channel is connected with the powder recovery component.

6. The multi-wavelength selective laser rapid prototyping system according to claim 1, **characterized in that** said imaging unit includes a CCD for image acquisition and a monitor for image presentation.

7. The multi-wavelength selective laser rapid prototyping system according to claim 1, **characterized in that** said temperature monitoring unit comprises an infrared thermal imager for infrared thermal image acquisition and a data acquisition card for acquiring data of the thermal imager and inputting the data to the computer.

8. A multi-wavelength selective laser rapid prototyping method, **characterized in that** said method comprises the following steps:
1) building a geometric model by using a computer drawing software, slicing the model, and planning a scanning path;
2) extracting air in manufacturing chamber and filling the chamber with protective gas according to need;
3) pretreating and feeding powders by a powder feeding component, and laying a layer of powders on a substrate by using the powder laying component;
4) simultaneously scanning the laid powders in the planned scanning path by using a focused first and second wavelength laser beam so that powders are moltento form a single-layer structure;
5) lowering the substrate by one layer, and repeating the processes of powder laying and selective laser scanning until the manufacturing process of the structure in designed geometric model is completed; and
6) cleaning the unmolten metal powders and taking out the manufactured structure.

9. The multi-wavelength selective laser rapid prototyping method according to claim 8, **characterized in that** said powder has a size from 10 nm to 200 µm.

10. The multi-wavelength selective laser rapid prototyping method according to claim 8, **characterized in that** said powder includes metal powder, plastic powder, ceramic powder, coated sand powder, polymer powder.
